# EUROPÄISCHE PATENTANMELDUNG

(11) **EP 1 286 310 A2**
(43) Veröffentlichungstag der Anmeldung: **26.02.2003**
(21) Anmeldenummer: 02102096.1
(22) Anmeldetag: 05.08.2002
(51) Int. Cl.: G07B 7/00

(54) **Computerunterstütztes Verfahren zum Vermitteln von Lerninhalten**

(30) Priorität: 07.08.2001 DE 10137923
(71) Anmelder: Philips Corporate Intellectual Property GmbH, 20099 Hamburg (DE); Koninklijke Philips Electronics N.V., 5621 BA Eindhoven (NL)
(72) Erfinder: Scharf, Joachim, c/o Philips Corporate Intel.Prop., 52088, Aachen (DE); Gazinski, Stefan, c/o Philips Corporate Intel.Pro, 52088, Aachen (DE); Noell-Wedemeyer, Kirsten, c/o Philips Corp.Intel., 52088, Aachen (DE)
(74) Vertreter: Volmer, Georg, Dipl.-Ing.

(57) **Zusammenfassung**

Die Erfindung betrifft ein Verfahren zur Vermittlung von Lerninhalten mittels eines elektronischen Datennetzes, wobei einer zu schulenden Person zunächst der Lerninhalt auf einem Client Computersystem angezeigt wird. Nachdem der Lerninhalt angezeigt wurde, hat die zu schulende Person die Möglichkeit eine Prüfung über den angezeigten Lerninhalt abzulegen. Die Erfindung beschreibt auch ein Computernetzwerk mit einem Server Computersystem sowie ein Server Computersystem.

## Beschreibung

Die Erfindung betrifft ein Verfahren zum Vermitteln von Lerninhalten. Weiterhin betrifft die Erfindung ein Computernetzwerk sowie ein Server Computersystem.

Eine Hauptanwendung für Computer stellt der Austausch von Informationen über ein Netzwerk dar. Das zur Zeit größte Computernetzwerk ist das Internet. Das Internet ist ein elektronisches Datennetz mit einer Vielzahl von angeschlossenen Computern und Computer-Nerzwerken. Die angeschlossenen Computer können mittels eines Service, beispielsweise das World Wide Web ("WWW"), untereinander Informationen austauschen.

Die Architektur des WWW entspricht dem konventionellen Client-Server-Modell. Die Begriffe "Client" und "Server" definieren die eigentliche Funktion eines Computers. Ein Client-Computer fragt nach Daten während ein Server Computer Daten liefert. So ermöglicht der WWW-Service einem Server Computer, beispielsweise einem Web Server, eine graphische Web Page als Information an einen angeschlossenen Client Computer zu senden. Eine Web Page kann entweder ein Datenblock oder ein Dokument sein, welches in einer Hyper Text Sprache, wie Hyper Text Markup Language ("HTML"), verfasst ist und welches Texte, graphische Darstellungen und Multimedia Objekte enthalten kann.

Jeder Computer und jede Web Page des WWW ist mittels eines Uniform Resource Locator ("URL") eindeutig identifizierbar. Um eine bestimmte Web Page anzuzeigen, spezifiziert der Client Computer die URL dieser Seite in Form einer Anfrage, beispielsweise als HyperText Transfer Protocol ("HTTP") Anfrage. Diese Anfrage wird zu dem Web Server, der diese Web Page unterstützt, weitergeleitet. Wenn der Web Server die Anfrage erhält, sendet er die Web Page zu dem Client Computer. Der Client Computer zeigt dann mit Hilfe eines Browser diese Web Page an. Ein Browser ist eine spezielles Anwendungsprogramm, welches Anfragen nach Web Pages und die Darstellung von Web Pages bewirkt. Inzwischen wurden im World Wide Web viele Web Server entwickelt mit deren Hilfe Händler/Hersteller für Produkte und Dienstleistungen werben und diese auch verkaufen können. Die Produktpalette reicht von Waren wie Musik, die elektronisch über das Internet zum Besteller ausgeliefert werden, bis hin zu Waren (Haushaltsgeräte, Computer samt Zubehör, Elektronikgeräte), die über traditionelle Transportwege zum Besteller gelangen.

Institutionen wie Schulen oder Universitäten, aber auch Anbieter im Bereich der neuen Medien, greifen dagegen bei Lernmethoden (Weitergabe an Information an Lernende) auf traditionelle Methoden zurück: Auswendig lernen, passiver Frontalunterricht oder Karteikästen. Dies sind bewusste, zeitintensive Lernmethoden und statische Systeme. Statische Systeme können jedoch weder auf das individuelle Lernniveau oder auf spezielle Lerngewohnheiten des Einzelnen eingehen, noch können diese Systeme von Person zu Person differenzieren.

Traditionelle Lernmethoden sind in einer ständig komplexer werdenden und immer schneller handelnden Umwelt unzureichend, um den Einzelnen Wissen zu vermitteln. In Zeiten, wo der Faktor Zeit eine entscheidende Rolle in Beruf, Ausbildung und Freizeit spielt, braucht der Lernende einfache, effektive und zeitersparende Instrumente zur Wissensaneignung.

Ein Verfahren zum Vermitteln von Lerninhalten mittels Computer ist beispielsweise aus der DE 199 61 546 bekannt. Bei diesem Verfahren werden Leerzeiten des Computers genutzt, um dem Benutzer Lerninhalte, beispielsweise Vokabeln, anzuzeigen und/oder bei ihm abzufragen.

Eine Aufgabe der Erfindung ist es, ein computerunterstütztes Verfahren zur Vermittlung von Lerninhalten zur Verfügung zu stellen.

Diese Aufgabe wird gelöst durch ein Verfahren zur Vermittlung von Lerninhalten mittels eines elektronischen Datennetzes, wobei
- ein Server Computersystem eine Anfrage von einer zu schulenden Person zu einem Lerninhalt via eines Client Computersystems empfängt,
- das Server Computersystem den Lerninhalt an das Client Computersystem sendet,
- auf dem Client Computersystem der Lerninhalt angezeigt wird,
- das Server Computersystem eine Anfrage an das Client Computersystem sendet, ob die zu schulende Person eine Prüfung zu dem angezeigten Lerninhalt ablegen möchte, nachdem der Lerninhalt auf dem Client Computersystem angezeigt wurde,
- die zu schulende Person eine Antwort via des Client Computersystems an das Server Computersystem sendet,
- das Server Computersystem bei positiver Antwort der zu schulenden Person, Prüfungsfragen zu dem angezeigten Lerninhalt an das Client Computersystem sendet,
- die Prüfungsfragen auf dem Client Computersystem angezeigt werden,
- die zu schulende Person die Antworten via des Client Computersystems an das Server Computersystem sendet,
- das Server Computersystem die Antworten empfängt, auswertet und das Ergebnis an das Client Computersystem sendet.

Mit Hilfe dieses Verfahren können einer zu schulenden Person zeit- und ortsungebunden Lerninhalte vermittelt werden. Die zu schulende Person muss nicht zu einer bestimmten Zeit an einem bestimmten Ort sein, sondern kann vielmehr den Zeitpunkt, wann sie sich informieren möchte, frei wählen und ihrer aktuellen Arbeitsbelastung anpassen.

Mit Hilfe der vorteilhaften Ausgestaltung in Anspruch 2 kann die zu schulende Person ihren Wissenstand überprüfen, bevor sie eine Prüfung zu dem angezeigten Lerninhalt ablegt.

Die vorteilhafte Ausführung gemäß Anspruch 3 kann der Betreiber des Server Computersystems den zu schulenden Personen Anreize geben, den Lerninhalt sorgfältig durchzuarbeiten.

Die vorteilhafte Ausgestaltung gemäß Anspruch 4 ermöglicht dem Betreiber des Server Computersystems eine einfache Aktualisierung der zu vermittelnden Lerninhalte.
Mit den in Anspruch 5 vorteilhaft aufgeführten elektronischen Datennetze, kann der Betreiber des Server Computersystems auswählen, welchen Client Computersystemen er die Teilnahme an dem Verfahren zur Vermittlung von Lerninhalten gewährt.

Weiterhin betrifft die Erfindung ein Computersystem mit einem Server Computersystem und ein Server Computersystem, welche jeweils dafür vorgesehen sind,
― eine Anfrage von einer zu schulenden Person zu einem Lerninhalt via eines Client Computersystems zu empfangen,
- den Lerninhalt an das Client Computersystem zu senden,
- eine Anfrage an das Client Computersystem zu senden, ob die zu schulende Person eine Prüfung zu dem angezeigten Lerninhalt ablegen möchte, nachdem der Lerninhalt an das Client Computersystem gesendet wurde,
- bei positiver Antwort der zu schulenden Person, Prüfungsfragen zu dem gesendeten Lerninhalt an das Client Computersystem zu senden,
- die Antworten der zu schulende Person via des Client Computersystems zu empfangen und
- die Antworten auszuwerten und das Ergebnis an das Client Computersystem zu senden.

Nachfolgend werden Ausführungsbeispiele der Erfindung anhand der Zeichnungen näher erläutert. Dabei zeigen
- Fig. 1: ein Flussdiagramm mit einer erfindungsgemäßen Ausführung des Verfahrens und
- Fig. 2: ein Flussdiagramm mit einer möglichen Ausführung eines Prüfungsbereichs im erfindungsgemäßen Verfahren.

Das Verfahren zur Vermittlung von Lerninhalten ist bevorzugt Bestandteil eines Lernoder Schulungsprogramms. Das Verfahren wird vorzugsweise mittels eines elektronischen Datennetzes und dem Client-Server-Modell ausgeführt. Das elektronische Datennetz kann zum Beispiel das Internet, ein, beispielsweise firmen-internes, Intranet oder ein Extranet sein.
Die zu vermittelnden Lerninhalte befinden sich dabei auf einem Server Computersystem und werden dort vorzugsweise in Datenbanken verwaltet. Eine Datenbank ist ein System zur Beschreibung, Speicherung und Wiedergewinnung von umfangreichen Datenmengen, die von mehreren Anwendungsprogrammen benutzt werden. Dieses Server Computersystem kann beispielsweise von einem Unternehmen, einer Universität, einer Schule, einer öffentlichen Institution oder einer Akademie betrieben werden. Eine zu schulende Person kann mittels eines Client Computersystems in Kontakt mit dem Server Computersystem treten. Die zu schulende Person kann beispielsweise ein Student, ein Schüler, ein Angestellter des Unternehmens, welches das Lern- oder Schulungsprogramm betreibt, oder ein Händler oder Verkäufer von Produkten des Unternehmens, welches das Lern- oder Schulungsprogramm betreibt, sein. Die Lerninhalte können beispielsweise Produktinformationen, Firmeninformationen Informationen über aktuelle Entwicklungen, Schul- oder Studieninhalte umfassen. Vorzugsweise sind die Lerninhalte in verschiedene Kategorien unterteilt.

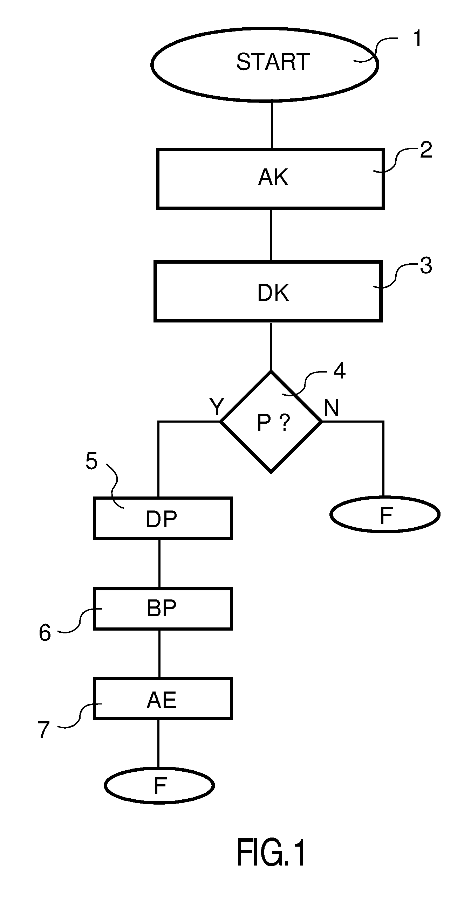

Wie in Fig. 1 gezeigt, wird zunächst das erfindungsgemäße Verfahren gestartet. Dazu lässt sich im ersten Schritt 1 die zu schulende Person auf seinem Client Computersystem eine Startseite des Lern- oder Schulungsprogramms anzeigen. Die Startseite kann beispielsweise eine Web Page sein, auf die die zu schulende Person über die Homepage des Betreibers des Lern- oder Schulungsprogramm gelangt. Im nächsten Schritt 2 wählt die zu schulende Person eine Kategorie von Lerninhalten aus (AK), in dem sie eine entsprechende Anfrage via des Client Computersystem an das Server Computersystem sendet. Dabei kann jede Kategorie noch weitere Unterkategorien aufweisen. Im nächsten Schritt 3 werden die Lerninhalte der ausgewählten Kategorie vom Server Computersystem an das Client Computersystem gesendet und auf dem Client Computersystem der zu schulenden Person angezeigt (DK). Das Anzeigen der Lerninhalte kann beispielsweise in Form von Web Pages, die Texte, Grafiken, Bilder, Animationen, Spiele oder einer Kombination dieser Mittel enthalten, erfolgen. Nachdem alle Lerninhalte der ausgewählten Kategorie auf dem Client Computersystem angezeigt wurden, sendet im nächsten Schritt 4 das Server Computersystem eine Anfrage via des Client Computersystems an die zu schulende Person, ob sie eine Prüfung zu der ausgewählten Kategorie ablegen möchte (P?). Sendet die zu schulende Person eine negative Antwort, so ist das Verfahren für diese Kategorie beendet (F). Vorzugsweise wird der zu schulenden Person wieder die Startseite des Lern- oder Schulungsprogramms auf seinem Client Computersystem angezeigt, in dem das Server Computersystem die entsprechende Web Page an das Client Computersystem sendet.

Möchte die zu schulende Person eine Prüfung zu der ausgewählten Kategorie an Lerninhalten ablegen, so gelangt sie in einen Prüfungsbereich. Im nächsten Schritt 5 werden die Prüfungsfragen zu der ausgewählten Kategorie an Lerninhalten, beispielsweise in Form von Web Pages, vom Server Computersystem an das Client Computersystem gesendet und dort angezeigt (DP). Vorzugsweise werden die Fragen einzelnd angezeigt. Die Antworten auf die Prüfungsfragen, welche beispielsweise in Form von Web Pages an das Server Computersystem geschickt werden, werden im nächsten Schritt 6 vom Server Computersystem ausgewertet (BP). In einem darauffolgenden Schritt 7 wird das Ergebnis vom Server Computersystem an das Client Computersystem gesendet und dort der zu schulenden Person angezeigt (AEP). Dabei kann es vorteilhaft sein, dass die richtigen Lösungen zu den Prüfungsfragen nicht mit angezeigt werden.

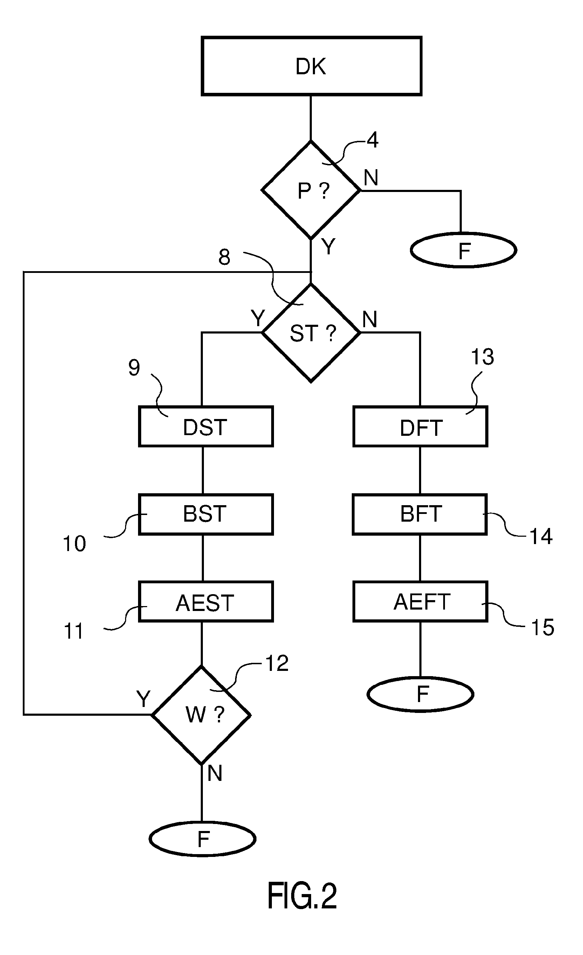

Es kann vorteilhaft sein, den Prüfungsbereich des Verfahrens, wie in Fig. 2 gezeigt, zu gestalten. In dieser Ausführungsform sendet das Server Computersystem, nachdem die Lerninhalte der ausgewählten Kategorie auf dem Client Computersystem angezeigt wurden (DK), im Schritt 4 die Anfrage, ob die zu schulende Person eine Prüfung zu der angezeigten Kategorie von Lerninhalten ablegen möchte (P?). Sendet die zu schulende Person eine positive Antwort an das Server Computersystem, sendet das Server Computersystem im nächsten Schritt 8 eine zweite Anfrage, ob die zu schulende Person zunächst einen Selbsttest ablegen möchte (ST?). Sendet die zu schulende Person eine negative Antwort an das Server Computersystem, werden im nächsten Schritt 13 vom Server Computersystem die endgültigen Prüfungsfragen, beispielsweise in Form von Web Pages, an das Client Computersystem gesendet und dort angezeigt (DFT). Im nächsten Schritt 14 werden vom Client Computersystem die Antworten der zu schulenden Person, beispielsweise in Form von Web Pages, an das Server Computersystem geschickt und dort ausgewertet (BFT). Im darauffolgenden Schritt 15 sendet das Server Computersystem das Ergebnis, beispielsweise in Form einer Web Page, an das Client Computersystem (AEFT). Es kann vorteilhaft sein, dass die zu schulende Person nur einmal die Möglichkeit hat zu jeder Kategorie an Lerninhalten eine endgültige Prüfung abzulegen.

Möchte die zu schulende Person dagegen zunächst einen Selbsttest ablegen, sendet das Server Computersystem in einem nächsten Schritt 9 entsprechende Selbsttestfragen, beispielsweise in Form von Web Pages, an das Client Computersystem und diese werden dort angezeigt (DST). Im nächsten Schritt 10 werden die Antworten der zu schulende Person, welche, beispielsweise in Form von Web Pages, an das Server Computersystem gesendet wurden, vom Server Computersystem ausgewertet (BST) und das Ergebnis im darauffolgenden Schritt 11 an das Client Computersystem gesendet (AEST). In einem anschließenden Schritt 12 sendet das Server Computersystem eine weitere Anfrage, beispielsweise in Form einer Web Page, ob die zu schulende Person eine weitere Prüfung ablegen möchte (W?). Sendet die zu schulende Person eine negative Antwort an das Server Computersystem, ist das Verfahren für diese Kategorie an Lerninhalten beendet (F). Vorzugsweise wird der zu schulenden Person wieder die Startseite des Lern- oder Schulungsprogramm auf seinem Client Computersystem angezeigt. Es kann bevorzugt sein, dass, wenn die zu schulende Person eine Selbsttestfrage falsch beantwortet, das Server Computersystem die richtige Antwort, beispielsweise in Form einer Web Page, an das Client Computersystem sendet.

Möchte die zu schulende Person eine weitere Prüfung ablegen, gelangt sie wieder zu der Abfrage, ob sie einen Selbsttest ablegen möchte (ST?). Möchte sie einen weiteren Selbsttest ablegen, läuft erneut die oben beschriebene Routine für den Selbsttest (DST, BST, AEST und W?) ab. Möchte die zu schulende Person keinen Selbsttest, sondern die endgültige Prüfung ablegen, läuft die eingangs beschriebene Routine für die Prüfung (DFT, BFT und AEFT) ab.

Die Fragen des Selbsttest oder der Prüfung können beispielsweise im Multiple-Choice-Verfahren gestellt werden

Es kann bevorzugt sein, dass der Betreiber die Teilnahme an dem Lern- oder Schulungsprogramm begrenzt. In dieser Ausführungsform sendet das Server Computersystem in einer Phase des Lern- oder Schulungsprogramm eine Web Page mit der Frage nach einer Zugangsberechtigung an das Client Computersystem. Die zu schulende Person gibt daraufhin einen Zugangscode, beispielsweise ein Passwort, welches ihm der Betreiber des Server Computersystem übermittelt hat, ein. Die Frage nach der Zugangsberechtigung kann zum Beispiel direkt nach dem Start des Lern- oder Schulungsprogramms oder bevor die endgültige Prüfung abgelegt werden kann, gesendet werden.

Kann die zu schulende Person keinen Zugangscode eingeben, sendet das Server Computersystem in einem weiteren Schritt eine Web Page mit einem Registrierungsformular. Möchte die zu schulende Person sich Registrieren lassen, so gibt sie ihre Daten in das Registrierungsformular ein und sendet es via des Client Computersystems zum Server Computersystem. Nach positiver Überprüfung der Angaben durch den Betreiber des Server Computersystems, wird der zu schulenden Person ihr Zugangscode, beispielweise per Post oder per Internet, übermittelt. Alternativ kann die zu schulende Person sich selbst ein Passwort auswählen. Es ist auch möglich, dass die zu schulende Person eine Anfrage nach einem Registrierungsformular an das Server Computersystem sendet und das Server Computersystem anschließend die Web Page mit dem Registrierungsformular sendet.

Das erfindungsgemäße Verfahren zur Vermittlung von Lerninhalten bietet insbesondere Unternehmen die Möglichkeit gezielt seine Mitarbeiter oder Händler und Verkäufer seiner Produkte, beispielsweise Fernseher, Monitore, DVD-Player, CD-Recorder, Rasierer, Haushaltsgeräte etc., zu schulen. So kann das Unternehmen, beispielsweise ein Elektronik-Konzern, verkaufsorientiert über seine Homepage, zum Beispiel http://www.philips.de, ein Schulungsprogramm über die Produkte des Unternehmens anbieten. Dies gibt dem Unternehmen die Möglichkeit, Händler und Verkäufer verkaufsorientiert zu schulen. Um den zu schulenden Personen einen Anreiz zu geben, die Lerninhalte sorgfältig durchzuarbeiten, kann es vorteilhaft sein, dass das Server Computersystem in Abhängigkeit von der Antwort der zu schulende Person, jeder beantworteten Prüfungsfrage eine bestimmte Anzahl an Punkten zuordnet. So kann die zu schulende Person für jede richtig beantwortete Prüfungsfrage eine bestimmte Anzahl an Punkten bekommen. Die zu schulende Person, welche vorzugsweise jeweils nur einmal eine endgültige Prüfung zu einer Kategorie ablegen kann, kann die Punkte sammeln und in eine Prämie, beispielsweise ein Produkt des Unternehmens, welches das Schulungsprogramm betreibt, eintauschen. Dabei können den einzelnen Prüfungsfragen je nach Schwierigkeitsgrad, eine unterschiedliche Anzahl an Punkten zugeordnet werden. Die zu schulende Person hat die Möglichkeit ihren Punktestand auf einer Web Page abzurufen. Auf einer weiteren Web Page hat die zu schulende Person Gelegenheit nachzusehen, welche Prämien es für eine bestimmte Anzahl an Punkten gibt.

Es kann vorteilhaft sein, dass eine zu schulende Person nach Aktualisierung einer Kategorie von Lerninhalten durch den Betreiber des Lern- oder Schulungsprogramms die Möglichkeit hat, eine erneute endgültige Prüfung zu dieser Kategorie abzulegen.

## Patentansprüche

1. Verfahren zur Vermittlung von Lerninhalten mittels eines elektronischen Datennetzes, wobei
- ein Server Computersystem eine Anfrage von einer zu schulenden Person zu einem Lerninhalt via eines Client Computersystems empfängt,
- das Server Computersystem den Lerninhalt an das Client Computersystem sendet,
- auf dem Client Computersystem der Lerninhalt angezeigt wird,
- das Server Computersystem eine Anfrage an das Client Computersystem sendet, ob die zu schulende Person eine Prüfung zu dem angezeigten Lerninhalt ablegen möchte, nachdem der Lerninhalt auf dem Client Computersystem angezeigt wurde,
- die zu schulende Person eine Antwort via des Client Computersystems an das Server Computersystem sendet,
- das Server Computersystem bei positiver Antwort der zu schulenden Person, Prüfungsfragen zu dem angezeigten Lerninhalt an das Client Computersystem sendet,
- die Prüfungsfragen auf dem Client Computersystem angezeigt werden,
- die zu schulende Person die Antworten via des Client Computersystems an das Server Computersystem sendet,
- das Server Computersystem die Antworten empfängt, auswertet und das Ergebnis an das Client Computersystem sendet.

2. Verfahren zur Vermittlung von Lerninhalten nach Anspruch 1,
**dadurch gekennzeichnet,**
**dass**
― das Server Computersystem, falls die zu schulenden Person eine Prüfung ablegen möchte, eine weitere Anfrage an das Client Computersystem sendet, ob die zu schulende Person einen Selbsttest zu dem angezeigten Lerninhalt ablegen möchte,
― in Abhängigkeit von der Antwort der zu schulenden Person, das Server Computersystem Selbsttestfragen oder Prüfungsfragen an das Client Computersystem sendet,
- die Selbsttest oder Prüfungsfragen auf dem Client Computersystem angezeigt werden,
- die zu schulende Person die Antworten via des Client Computersystems an das Server Computersystem sendet,
- das Server Computersystem die Antworten empfängt, auswertet und das Ergebnis an das Client Computersystem sendet.

3. Verfahren zur Vermittlung von Lerninhalten nach Anspruch 1,
**dadurch gekennzeichnet,**
**dass** das Server Computersystem in Abhängigkeit von der Antwort der zu schulende Person jeder beantworteten Prüfungsfrage eine bestimmte Anzahl an Punkten zuordnet.

4. Verfahren zur Vermittlung von Lerninhalten nach Anspruch 1,
**dadurch gekennzeichnet,**
**dass** die Lerninhalte in Datenbanken verwaltet werden.

5. Verfahren zur Vermittlung von Lerninhalten nach Anspruch 1,
**dadurch gekennzeichnet,**
**dass** das elektronische Datennetz das Internet, ein Extranet und oder ein Intranet ist.

6. Computernetzwerk mit einem Server Computersystem, welches dafür vorgesehen ist
― eine Anfrage von einer zu schulenden Person zu einem Lerninhalt via eines Client Computersystems zu empfangen,
- den Lerninhalt an das Client Computersystem zu senden,
- eine Anfrage an das Client Computersystem zu senden, ob die zu schulende Person eine Prüfung zu dem angezeigten Lerninhalt ablegen möchte, nachdem der Lerninhalt an das Client Computersystem gesendet wurden,
- bei positiver Antwort der zu schulenden Person, Prüfungsfragen zu den gesendeten Lerninhalten an das Client Computersystem zu senden,
- die Antworten der zu schulende Person via des Client Computersystems zu empfangen und
- die Antworten auszuwerten und das Ergebnis an das Client Computersystem zu senden.

7. Server Computersystem, welches dafür vorgesehen ist
― eine Anfrage von einer zu schulenden Person zu einem Lerninhalt via eines Client Computersystems zu empfangen,
- den Lerninhalt an das Client Computersystem zu senden,
- eine Anfrage an das Client Computersystem zu senden, ob die zu schulende Person eine Prüfung zu dem angezeigten Lerninhalt ablegen möchte, nachdem der Lerninhalte an das Client Computersystem gesendet wurde,
- bei positiver Antwort der zu schulenden Person, Prüfungsfragen zu dem gesendeten Lerninhalt an das Client Computersystem zu senden,
- die Antworten der zu schulende Person via des Client Computersystems zu empfangen und
- die Antworten auszuwerten und das Ergebnis an das Client Computersystem zu senden.
